# EUROPEAN PATENT APPLICATION

(11) **EP 4 410 705 A1**
(43) Date of publication of application: **07.08.2024**
(21) Application number: 22875409.9
(22) Date of filing: 23.03.2022
(51) Int. Cl.: B65D 83/08, A47K 10/20, A47K 7/00

(54) **PACKAGING BAG AND SHEET PACKAGING BODY**

(30) Priority: 30.09.2021 JP 2021160335
(71) Applicant: DAIO PAPER CORPORATION, Shikokuchuo-shi Ehime 799-0492 (JP)
(72) Inventor: SHINOHARA, Shinobu, Fuji-shi, Shizuoka 419-0202 (JP); WARASHINA, Shinichi, Fuji-shi, Shizuoka 419-0202 (JP)
(74) Representative: Epping - Hermann - Fischer
(86) International application number: PCT/JP2022/013651
(87) International publication number: WO 2023/053526

(57) **Abstract**

A packaging bag for storing sheets includes a base material that contains a paper component. The base material includes a base layer that contains the paper component, and an inner layer that is layered on one surface of the base layer and is provided on an interior of the packaging bag. The inner layer contains a thermoplastic resin. The thermoplastic resin contains a slip agent.

## Description

### Technical Field

The present invention relates to packaging bags and sheet packages.

### Background Art

Sheet packages storing sheets such as paper towels, tissue paper, or the like are distributed and used in a state where multiple sheets are stored in a packaging bag made of a resin film (see, for example, Patent Documents 1 and 2). In recent years, in the interest of curbing the environmental impact of, for example, global warming associated with CO² emissions and marine pollution such as microplastics, the use of paper instead resin as a material for packaging bags of sheet packages has been gaining attention.

### [Related Art Documents]

### [Patent Document]

[Patent Document 1] Japanese Patent Application Laid-Open Publication No. 2008-183034
[Patent Document 2] Japanese Patent Application Laid-Open Publication No. 2018-177364

### Summary of the Invention

### [Problem to be Solved by the Invention]

Paper packaging bags, however, lack flexibility compared to resin packaging bags. Thus, when perforations for aiding the opening of a package are provided in paper packaging bags, the paper packaging bags are difficult to open because the perforations cannot be torn easily.

An object of the present invention is to provide a paper packaging bag that is easy to open.

### Means for Solving Problem

A packaging bag according to one aspect of the present invention is a packaging bag for storing sheets. The packaging bag includes a base material that contains a paper component. The base material includes a base layer that contains the paper component, and an inner layer that is layered on one surface of the base layer and is provided on an interior of the packaging bag. The inner layer contains a thermoplastic resin. The thermoplastic resin contains a slip agent.

### Effects of the Invention

According to one aspect of the present invention, a paper packaging bag that is easy to open can be provided.

### Brief Description of the Drawings

[FIG. 1] FIG. 1 is a view illustrating a sheet package in which sheets are stored in a packaging bag;
[FIG. 2] FIG. 2 is a view illustrating sheets that are to be stored in the packaging bag;
[FIG. 3] FIG. 3 is a view in which the sheet package of FIG. 1 is seen from the side of a top surface;
[FIG. 4] FIG. 4 is a view in which the sheet package of FIG. 1 is seen from the side of a bottom surface;
[FIG. 5] FIG. 5 is a view in which the sheet package of FIG. 1 is seen from the side of a front surface;
[FIG. 6] FIG. 6 is a view in which the sheet package of FIG. 1 is seen from the side of a back surface;
[FIG. 7] FIG. 7 is a view in which the sheet package of FIG. 1 is seen from the side of a left side surface;
[FIG. 8] FIG. 8 is a view in which the sheet package of FIG. 1 is seen from the side of a right side surface;
[FIG. 9] FIG. 9 is a view illustrating an example (first embodiment) of the cross section of a base material of the packaging bag;
[FIG. 10] FIG. 10 is a view illustrating a state where the packaging bag of the sheet package has been opened;
[FIG. 11] FIG. 11 is a view illustrating a state where the sheet package is being used; and
[FIG. 12] FIG. 12 is a view illustrating an example (second embodiment) of the cross section of the base material of the packaging bag.

### Detailed Description of the Invention

### <Package>

Embodiments of the present invention will be described with reference to the accompanying drawings. Same reference numerals are used to denote common components throughout the drawings, and a description thereof may be omitted. The scale of each component in the drawings may differ from those in practice. Note that a three-dimensional orthogonal coordinate system based on three axis directions (the X direction, the Y direction, and the Z direction) is used in each drawing. The X direction refers to the lengthwise direction of the packaging bag, the Y direction refers to a width direction of the packaging bag, and the Z direction refers to the height direction (the vertical direction or the thickness direction).

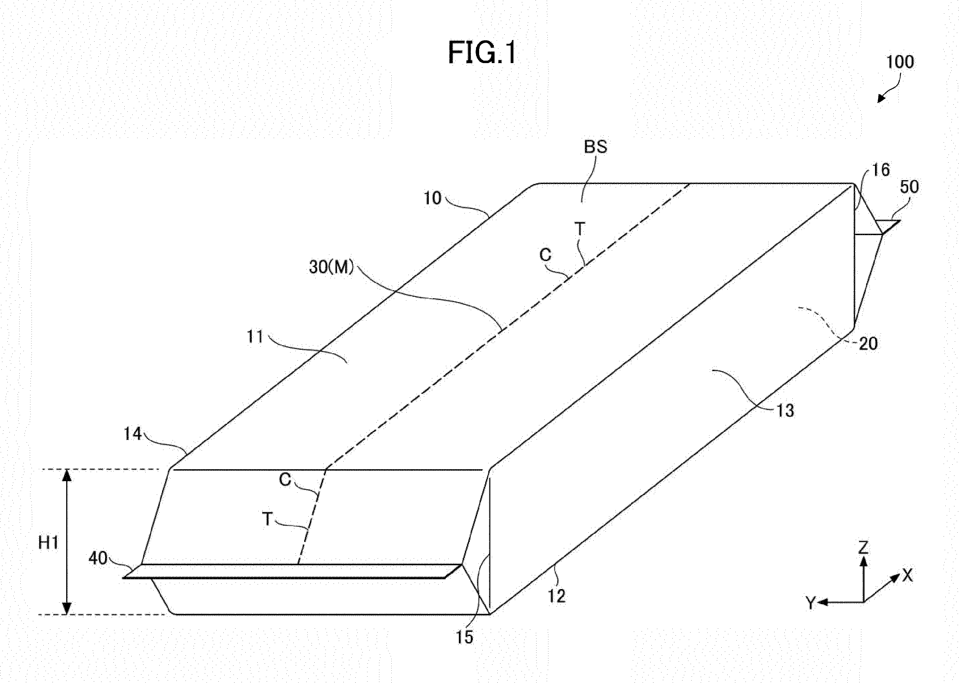

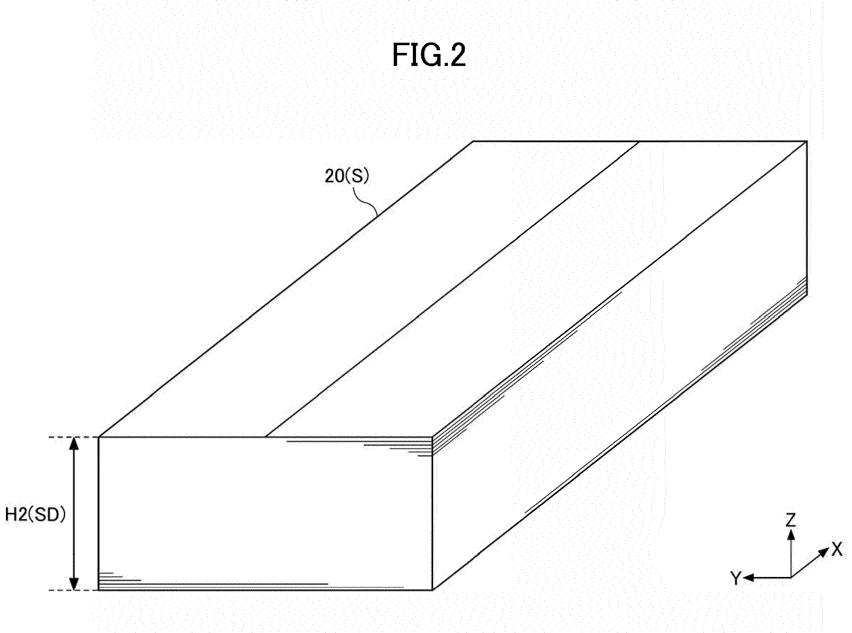

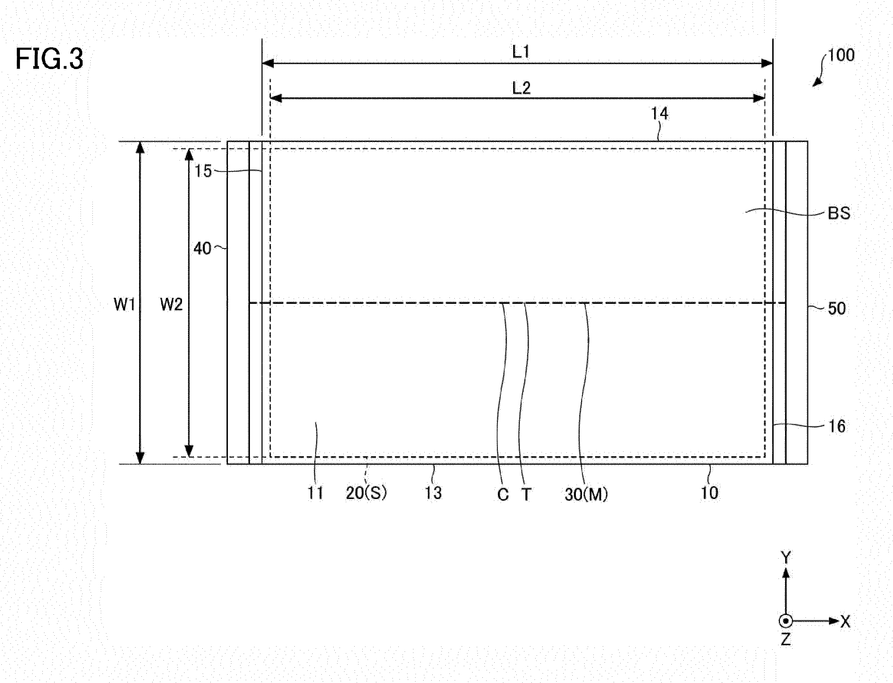

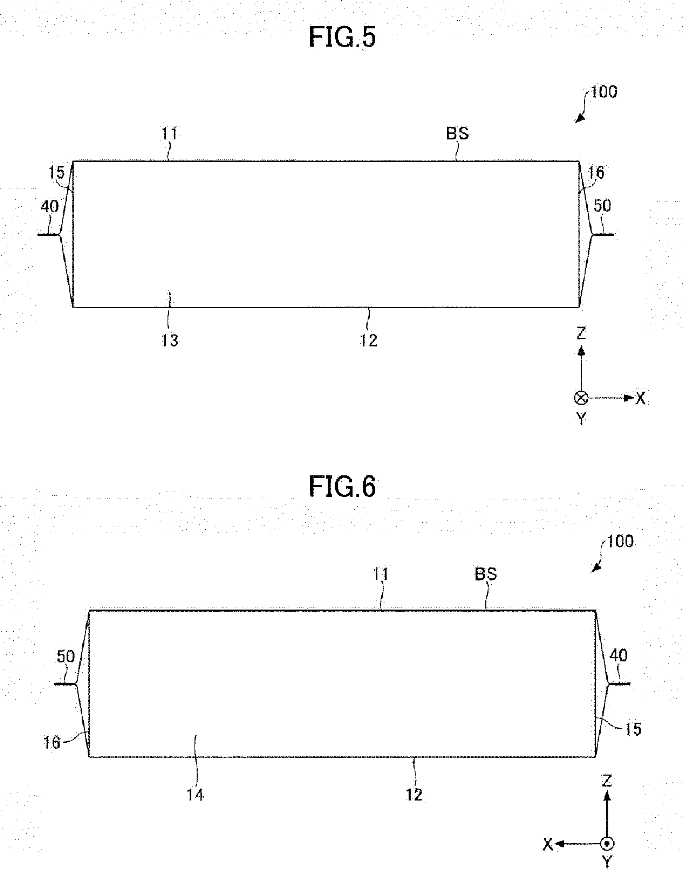

FIG. 1 is a view illustrating a sheet package storing sheets in a packaging bag according to the embodiment. FIG. 2 is a view illustrating sheets that are to be stored in the packaging bag according to the embodiment. FIGS. 3, 4, 5, 6, 7, and 8 are views illustrating the sheet package of FIG. 1 when viewed from the side of the top surface, the bottom surface, the front surface, the back surface, the left side surface, and the right side surface, respectively.

As illustrated in FIG. 1, a sheet package 100 includes a packaging bag 10 and a sheet stack 20 (plurality of sheets S). The sheet package 100 is an example of a sheet package according to the embodiment. The packaging bag 10 is an example of a packaging bag forming the sheet package according to the embodiment. The sheet stack 20 is an example of sheets stored in the packaging bag according to the embodiment.

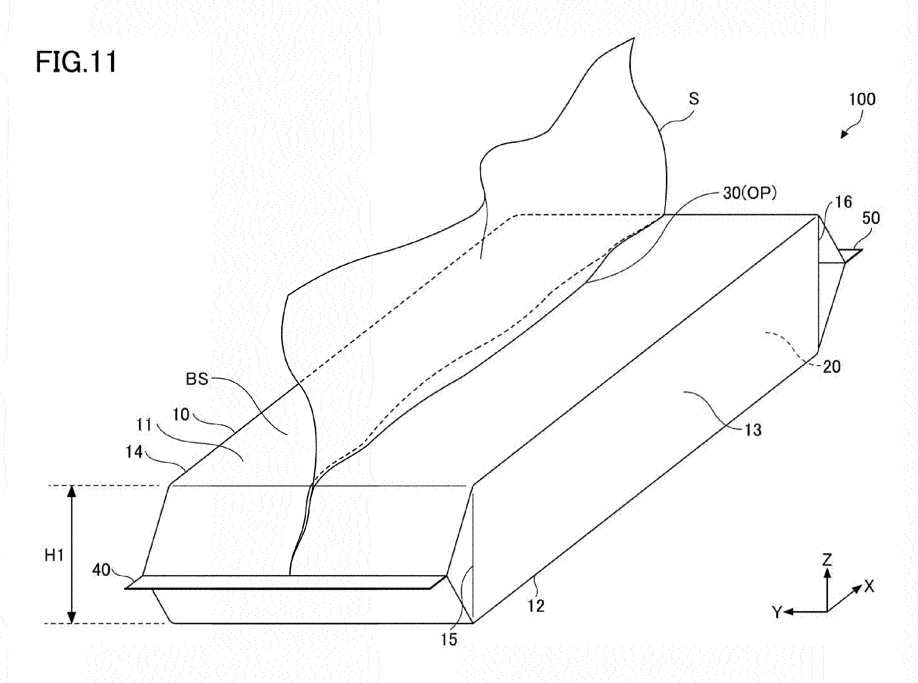

As illustrated in FIG. 2, a stack of sheets (or sets of sheets) S (the sheet stack 20) are stored in the packaging bag 10. The sheet stack 20 is stored in the packaging bag 10 such that the stacking direction (SD direction) of the sheets S corresponds to the height direction (Z direction). The sheet stack 20 is configured such that one set of sheets S can be pulled out through a retrieval opening (an opening OP) that is formed in the packaging bag 10 (FIG. 11).

The form of the sheet stack 20 is not particularly limited, and may employ, for example, a stack in which the sheets S are folded and stacked, a stack in which the sheets S are interfolded to form an interleaved stack (what is known in the art as a pop-up format sheet stack), a stack in which the sheets S have been simply stacked, or the like.

The dimensions of the sheets S (the sheet stack 20) may be as follows: a length L2 of the packaging bag 10 in the lengthwise direction (X direction) may be approximately 150 mm to 250 mm, a width W2 of the packaging bag 10 in the width direction (Y direction) perpendicular to the lengthwise direction (X direction) may be approximately 70 to 150 mm, and a height H2 of the packaging bag 10 in the height direction (Z direction) may be approximately 20 mm to 100 mm (FIGS. 2 and 3). Such a stack of thin paper sheets may be fabricated by, for example, rotary or multi-stand interfolder.

The form of the sheets S is not particularly limited. The sheets S may be used as, for example, sanitary paper products such as paper towels, kitchen paper, tissue paper, toilet paper, and the like. These sanitary paper products may also include sanitary paper products with moisturizing ingredients (for example, lotion tissues and the like).

Further, the use of the sheets S is not particularly limited. The sheets S are applicable to any of industrial use, household use, and portable use. Among these uses, the sheets according to the embodiment are particularly suitable for paper towels for household use and paper towels for portable use.

Although the number of plies included in the sheet S is not particularly limited, the sheet S may be one ply or more. Preferably, the sheet S may have one ply or two plies (double ply). The shape of the sheet S is not particularly limited, and the sheet S may preferably have, for example, a quadrilateral (such as a rectangle or a square) contour shape when two-ply sheets are folded.

The material of the sheet S is not particularly limited. For example, a sheet such as paper, non-woven fabric, or cloth may be used as the material of the sheet S. More preferably, a piece of paper (paper sheet) may be used as the material of the sheet S. In a case where the sheet S is a paper sheet, base paper mainly made from pulp can be used. Conventional compositions for paper sheets can be used as the pulp composition. For example, the proportion of pulp is 50 mass% or more, preferably 90 mass% or more, and more preferably 100 mass%.

Further, the pulp composition of the sheet S (paper sheet) is not particularly limited. For example, a softwood pulp such as needle bleached kraft pulp (NBKP) or needle unbleached kraft pulp (NUKP) and a hardwood pulp such as leaf bleached kraft pulp (LBKP) or leaf unbleached kraft pulp (LUKP) may be used at an appropriate ratio.

Note that the ratio of hardwood pulp to softwood pulp in the pulp composition of the sheet S (paper sheet) is not particularly limited, but may be, preferably, 10: 90 to 80:20. More preferably, the sheet S can have a pulp composition in which the proportion of the softwood pulp is greater than the proportion of hardwood pulp. Recycled paper pulp may be used as pulp included in the pulp composition of the sheet S (paper sheet) .

The basis weight of the sheet S is not particularly limited, but in the case of paper, the basis weight may be 5 g/m² or more and 80 g/m² or less, preferably be 10 g/m² or more and 60 g/m² or less, or more preferably be 10 g/m² or more and 45 g/m² or less, depending on the number of plies. In the case of non-woven fabric, the basis weight may be 20 g/m² or more and 100g/m² or less. The basis weight may be measured in accordance with JIS P 8124 (2011).

The thickness of the sheet S (paper sheet) is not particularly limited, and may be, for example, a paper thickness measured under the conditions set forth in JIS P 8111 (1998). For example, in a case where the sheet S is paper, the paper thickness may be 50 µm or more and 600 um or less, may preferably be 60 µm or more and 500 um or less, or may more preferably be 130 um or more and 400 um or less per two-ply sheet.

Further, the sheet S (paper sheet) may be embossed. Such embossing can be performed using conventional embossing methods.

The form of the packaging bag 10 is not particularly limited. In the embodiment, the packaging bag 10 has a top surface 11, a bottom surface 12, a side surface 13, a side surface 14, an end surface 15, and an end surface 16. Note that the in the packaging bag 10, the top surface 11 and the bottom surface 12 oppose each other in the vertical direction (Z direction), the side surface 13 and the side surface 14 oppose each other in the width direction (Y direction), and the end surface 15 and the end surface 16 oppose each other in the lengthwise direction (X direction). The end surfaces 15 and 16 are continuous with the top surface 11, the bottom surface 12, the side surface 13, and the side surface 14 (FIG. 1 and FIGS. 3 to 8).

The dimensions of the packaging bag 10 are not particularly limited. For example, a length L1 of the packaging bag 10 in the lengthwise direction (X direction) can be approximately 150 mm to 200 mm, a width W1 of the packaging bag 10 in the width direction (Y direction) perpendicular to the lengthwise direction (X direction) can be approximately 70 mm to 150 mm, and a height H1 of the packaging bag in the height direction (Z direction) can be approximately 20 mm to 100 mm (FIGS. 1 and 3). Note that the dimensions of the packaging bag 10 represent the dimensions in a state where the sheet stack 20 is stored in the packaging bag 10 (FIGS. 1 and 2).

A retrieval opening that extends in the lengthwise direction (X direction) of the packaging bag 10 is formed on the top surface 11 of the packaging bag 10, the top-surface-11-side area of the end surface 15, and the top-surface-11-side area of the end surface 16. More specifically, a tear perforation line 30 is formed at the retrieval opening. The tear perforation line 30 is a cutting line in which a cut C and a tie T (an uncut portion between two cuts C) are alternately provided, and when the tie T is torn, the two adjacent cuts C form a continuous cut (FIGS. 1, 3, 7, and 8).

In the embodiment, the tear perforation line 30 form linear perforations M in which the cut C and the tie T are alternately provided (FIGS. 1, 3, 7, and 8). The tie T and the cut C of the tear perforation line 30 (perforations) can be provided at an appropriate ratio. For example, the ratio of the tie T to the cut C may be 1:1 to 1:7, may preferably be 1:1.3 to 1:5, or may more preferably be 1:1.5 to 1:3.

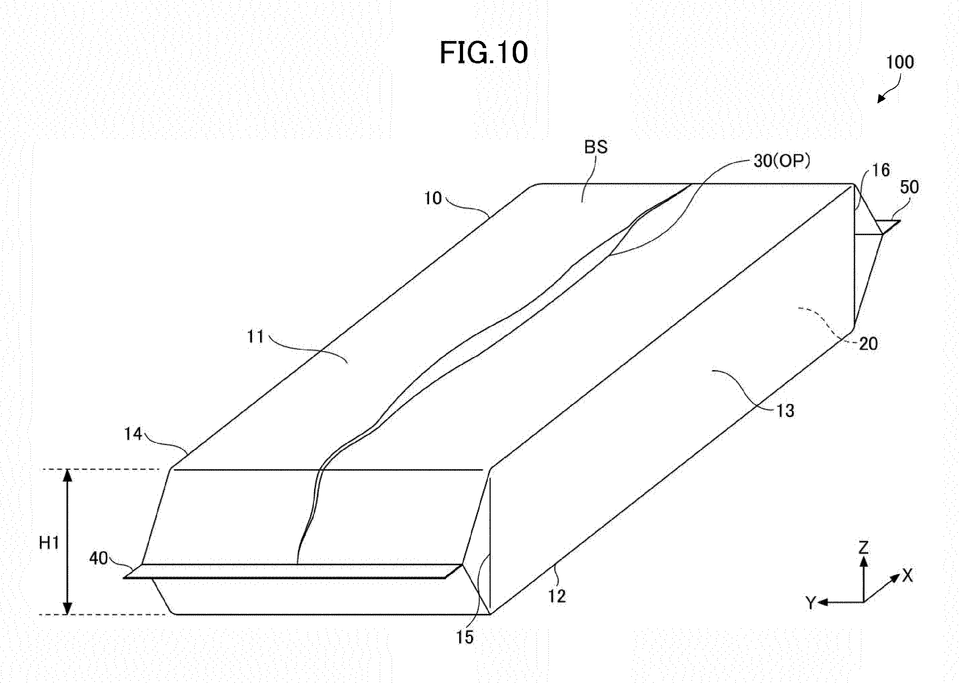

In the packaging bag 10 according to the embodiment, when the tear perforation line 30 (perforations M) is torn, the retrieval opening (opening OP) from which each sheet S is pulled out is formed on the top surface 11 of the packaging bag 10 (FIGS. 1 and 10) .

Note that the tear perforation line 30 can be manufactured by an appropriate method. Although not illustrated in the drawings, the tear perforation line 30 may be formed by, for example, placing a base material BS (to be described later) of the packaging bag 10 between a needle and a table and piercing the tip of the needle through the base material BS toward a receiving groove in the table.

A vent (not illustrated) may be formed in the packaging bag 10. The vent may function as an air hole of the packaging bag 10. The position of the vent is not particularly limited. In the embodiment, the vent can be provided in the side surface 13, the side surface 14, or the end surfaces 15 and 16 of the packaging bag 10. The number of vents to be provided is not limited. Further, the shape of the vent is not particularly limited, and may be, for example, circular in a plan view. Furthermore, the dimension of the vent is not particularly limited, and may be, for example, approximately 2 mm in diameter.

Note that the vent can be manufactured by an appropriate method. For example, in a similar manner to the tear perforation line 30 described above, the vent can be formed by placing the base material BS of the packaging bag 10 between a needle and a table and piercing the tip of the needle through the base material BS toward a receiving groove of the table. Note that a table without a receiving groove may be used when a vent is to be formed.

By providing such a vent in the packaging bag 10, the packaging bag is less likely to burst while the sheet package 100 is being stored or transported.

The packaging form of the packaging bag 10 is not particularly limited. For example, packaging (pillow packaging) obtained by processing the base material BS of the packaging bag 10 into a cylindrical shape and sealing the opening-end portion of the cylindrical base material BS, packaging (caramel packaging) obtained by folding and sealing both ends of the cylindrical sheet for the packaging bag 10, or a combination these packaging forms may be adopted as the packaging form of the packaging bag 10. Note that in the case of pillow packaging, the cylindrical base material BS may be folded in a gusset shape.

In the embodiment, the packaging bag 10 is composed of pillow packaging that includes at least one sealing portion. More specifically, sealing portions (end seals) 40 and 50 are formed on the end surfaces 15 and 16, respectively, of the packaging bag 10, and a sealing portion (bottom seal) 60 is formed on the bottom surface 12 of the packaging bag 10, thus allowing the sheets S (sheet stack 20) to be packaged by pillow packaging.

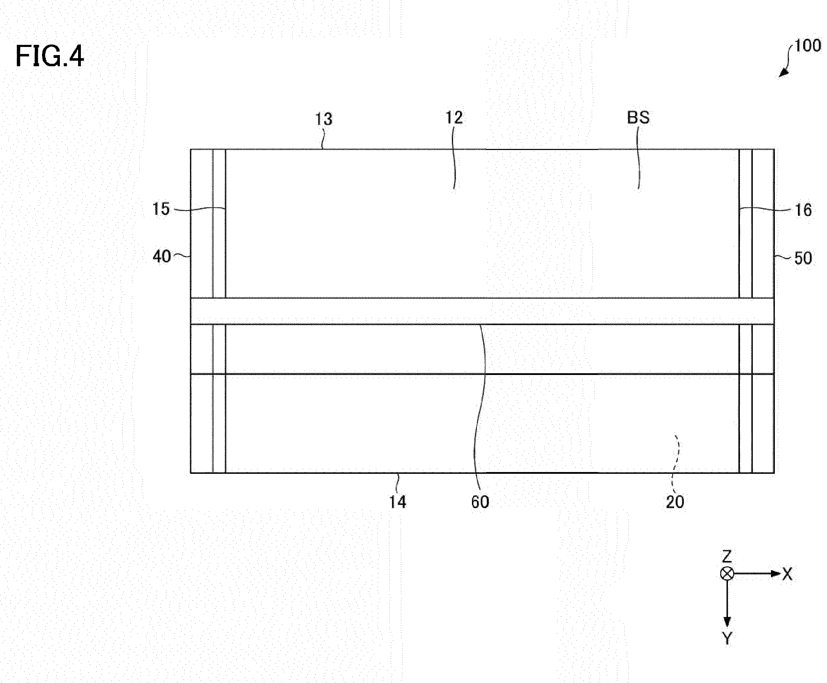

The sealing portions 40, 50, and 60 are heat-sealed in the packaging bag 10 according to the embodiment. In this case, heat sealing refers to sealing performed by heating portions of the base material BS to seal together the portions of the packaging bag sheet. More specifically, the sealing portions 40, 50, and 60 are heat-sealed in a state where an inner layer (resin layer) 10B of the base material BS (to be described later) is provided on the interior of the packaging bag 10 (FIG. 4).

In the packaging bag 10, the bonding pitch of the sealing portion 40, the bonding pitch of the sealing portion 50, and the bonding pitch of the sealing portion 60 each may preferably be 0.5 mm or more and 2 mm or less, may more preferably be 0.8 mm or more and 1.8 mm or less, or may even more preferably be 1.0 mm or more and 1.5 mm or less.

In this case, the bonding pitch represents an interval, in a predetermined direction, between portions (not illustrated) that are adhered in a protruding manner when seen from one side (for example, the bottom-surface-12-side of the packaging bag 10) of the sealing portions 40, 50, and 60. For the sealing portions 40 and 50, the predetermined direction is the width direction (Y direction) of the packaging bag 10. For the sealing portion 60, the predetermined direction is the lengthwise direction (X direction) of the packaging bag 10.

In the embodiment, as described above, making the bonding pitch of each of the sealing portions (sealing portions 40, 50, and 60) 0.5 mm or more to 2 mm or less can enhance the bonding function of the inner layer (resin layer 10B) provided on a base layer (paper layer) 10A (to be described later). As a result, the packaging bag 10 (pillow packaging) that has high sealability can be obtained.

The packaging bag 10 is composed of the base material BS that contains a paper component. The paper component is a material in which cellulose fibers (pulp) have been agglutinated. The composition of pulp in the paper component is not limited, and for example, the ratio of hardwood pulp to softwood pulp may be 0:100 to 70:30. The composition of pulp may preferably be such that the proportion of the softwood pulp is greater than the proportion of hardwood pulp. Recycled paper pulp may be used as pulp.

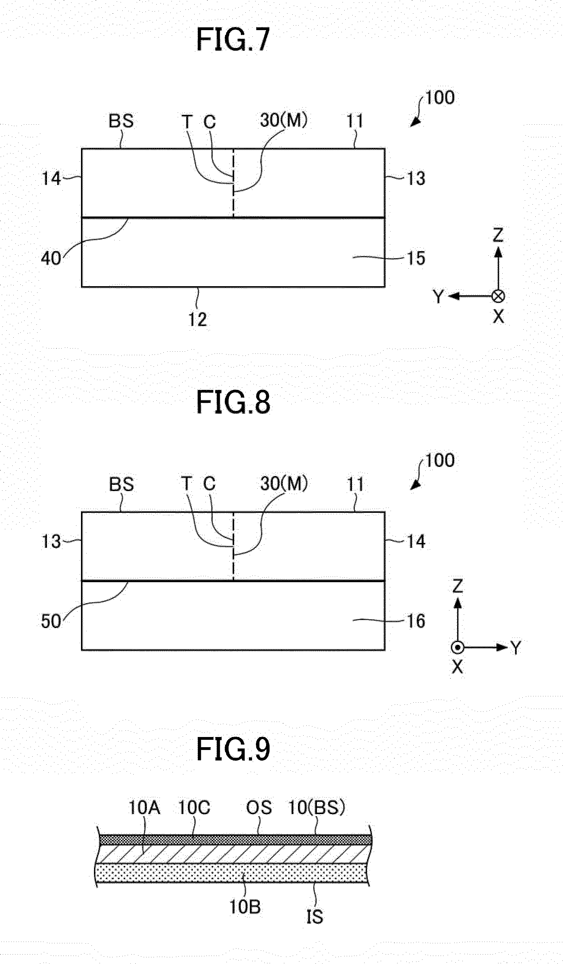

The base material BS that forms the packaging bag 10 according to the first embodiment includes the base layer 10A, the inner layer 10B, and an outer layer 10C. The base material BS according to the first embodiment includes a three-layer structure in which the inner layer 10B and the outer layer 10C are layered on the respective surfaces of the base layer 10A (FIG. 9).

The base layer 10A forms the base portion of the base material BS. The base layer 10A also forms a paper layer that includes the paper component described above.

The material of the paper component included in the base layer (paper layer) 10A is not particularly limited, and for example, the material may be formed by kraft paper or rayon paper.

Kraft paper is paper made using kraft pulp as raw material. Rayon paper is paper made by blending kraft pulp with rayon fibers that have been chemically synthesized from wood pulp and the like. Note that, in the interest of achieving both softness and strength in the packaging bag 10, it is preferable for the rayon paper to contain 20 mass% or less of rayon fiber.

The basis weight of the base layer (paper layer) 10A is not limited. For example, the basis weight of the base layer 10A may preferably be 10 g/m² or more and 70 g/m² or less, may more preferably be 15 g/m² or more and 60 g/m² or less, or may even more preferably be 20 g/m² or more and 50 g/m² or less. The basis weight may be measured in accordance with JIS P 8124 (2011).

The thickness of the base layer (paper layer) 10A is not particularly limited. For example, the thickness of the base layer 10A may preferably be 20 µm or more and 300 um or less, may more preferably be 30 um or more and 200 um or less, or may even more preferably be 40 µm or more and 180 µm or less. The thickness may be measured in accordance with JIS P 8118 (2014).

The tensile strength of the base layer (paper layer) 10A is not particularly limited. For example, the tensile strength of the base layer 10A, with respect to the vertical direction (the flow direction or an MD direction) of the fiber, may preferably be 500 cN/m or more and 20000 cN/m or less, may more preferably be 1000 cN/m or more and 15000 cN/m or less, or may even more preferably be 1500 cN/m or more and 12000 cN/m or less.

The tensile strength of the base layer (paper layer) 10A, with respect to the horizontal direction (a CD direction or a direction perpendicular to the flow direction) of the fiber, may preferably be 100 cN/m or more and 10000 cN/m or less, may more preferably be 300 cN/m or more and 5000 cN/m or less, or may even more preferably be 500 cN/m or more and 2500 cN/m or less. The tensile strength may be measured in accordance with JIS P 8113 (2006).

The elongation of the base layer (paper layer) 10A is not particularly limited. For example, the elongation with respect to the vertical direction (MD direction) of the fiber may be 0.5% or more and 30% or less, may preferably be 1% or more and 25% or less, or may more preferably be 2% or more and 20% or less. The elongation of the base layer (paper layer) 10A with respect to the horizontal direction (CD direction) of the fiber may be 0.5% or more and 20% or less, 1% or more and 10% or less, or 2% or more and 5% or less. The elongation may be measured in accordance with JIS P 8113 (2006).

The tear strength of the base layer (paper layer) 10A is not particularly limited. For example, the tear strength with respect to the vertical direction (MD direction) of the fiber may be 50 mN or more and 500 mN or less, may preferably be 80 mN or more and 480 mN or less, or may more preferably be 100 mN or more and 450 mN or less.

The tear strength with respect to the horizontal direction (CD direction) of the fiber may be 200 mN or more and 1000 mN or less, may preferably be 250 mN or more and 900 mN or less, or may more preferably be 300 mN or more and 800 mN or less. The tear strength may be measured in accordance with JIS P 8116 (2000).

The inner layer 10B is layered on one surface of the base layer (paper layer) 10A, and forms a resin layer containing a thermoplastic resin. An inner surface IS of the base material BS provided on the interior (the side on which the inner layer 10B of the base material BS is formed) of the packaging bag 10 is formed on the inner layer 10B. Note that the interior of the packaging bag 10 corresponds to the side where the sheets S are stored in the packaging bag 10, and the inner surface IS of the base material BS provided on the interior of the packaging bag 10 corresponds to the surface on the side where the base material BS contacts the sheets S stored in the packaging bag 10.

The thermoplastic resin material contained in the inner layer (resin layer) 10B is not particularly limited, but may preferably be low-density polyethylene. Note that the low-density polyethylene may either be high-pressure low-density polyethylene (HP-LDPE) or linear low-density polyethylene (L-LDPE).

The thickness of the inner layer (resin layer) 10B is not particularly limited, and may preferably be 5 µm or more and 40 um or less, may more preferably be 7 um or more and 35 um or less, or may even more preferably be 9 µm or more and 30 um or less. The paper thickness may be measured in accordance with JIS P 8118 (2014).

The thermoplastic resin material contained in the inner layer (resin layer) 10B contains a slip agent. A slip agent is an agent that reduces the friction coefficient of the surface (inner surface) of the inner layer 10B. Although the slip agent is added to the thermoplastic resin contained in the inner layer (resin layer) 10B in this embodiment, the slip agent may be applied on the inner surface IS of the base material BS.

The components of the slip agent are not particularly limited. For example, ethylene homopolymers, fatty acid amides, vegetable oil, or the like can be used as the main component. The slip agent content in the thermoplastic resin is not particularly limited. In addition to the main component, the slip agent may contain additives for purposes such as maintaining the stability of the slip agent.

The outer layer (printed layer) 10C is provided on another surface of the paper layer 10A, and forms a printed layer of the packaging bag. An outer surface OS of the base material BS provided on the exterior of the packaging bag 10 is formed on the outer layer (printed layer) 10C. Note that the outer surface OS of the base material BS provided on the exterior of the packaging bag 10 forms the surface on the side where the base material BS does not contact the sheets S stored in the packaging bag 10.

The outer layer (printed layer) 10C contains a gripping agent. The gripping agent is an agent that increases the friction coefficient of the surface (outer surface) of the outer layer (printed layer) 10C. Although the gripping agent is applied to the outer surface OS of the base material BS in this embodiment, the gripping agent may be included in the outer layer (printed layer) 10C.

The components of the gripping agent is not particularly limited. For example, a medium ink (synthetic resin), an oil-based varnish, or the like can be used as a main component. Note that the amount of the gripping agent used in the outer layer (printed layer) 10C is not particularly limited. In addition to the main component, the gripping agent may contain an auxiliary agent or a solvent for purposes such as maintaining the stability of the slip agent.

In this embodiment, the proportion of the paper component in the packaging bag 10 (base material BS) may be 50% or more.

The basis weight of the packaging bag 10 (base material BS) is not particularly limited. For example, the basis weight may preferably be 20 g/m² or more and 100 g/m² or less, may more preferably be 25 g/m² or more and 70 g/m² or less, or may even more preferably be 30 g/m² or more and 60 g/m² or less. The basis weight may be measured in accordance with JIS P 8124 (2011).

The thickness (paper thickness) of the packaging bag 10 (base material BS) is not particularly limited. For example, the thickness may be greater than 25 µm or more and 350 µm or less, may preferably be 30 um or more and 250 um or less, or may more preferably be 45 µm or more and 200 um or less. The thickness may be in accordance with JIS P 8118 (2014).

The tensile strength of the packaging bag 10 (base material BS) is not particularly limited. For example, the tensile strength with respect to the vertical direction (MD direction) of the fiber may be 1000 cN/m or more and 20000 cN/m or less, may preferably be 1500 cN/m or more and 18000 cN/m or less, or may more preferably be 2000 cN/m or more and 15000 cN/m or less.

The tensile strength with respect to the horizontal direction (CD direction) of the fiber may be 500 cN/m or more and 10000 cN/m or less, may preferably be 1000 cN/m or more and 8000 cN/m or less, or may more preferably be 1500 cN/m or more and 5000 cN/m or less. The tensile strength may be measured in accordance with JIS P 8113 (2006).

The elongation of the packaging bag 10 is not particularly limited. For example, the elongation with respect to the vertical direction (MD direction) of the fiber may be 0.5% or more and 30% or less, may preferably be 1% or more and 25% or less, or may more preferably be 2% or more and 20% or less. The elongation with respect to the horizontal direction (CD direction) of the fiber may be 0.5% or more and 20% or less, 1% or more and 10% or less, or 2% or more and 5% or less. The elongation may be measured in accordance with JIS P 8113 (2006).

The tear strength of the packaging bag 10 is not particularly limited. For example, the tear strength with respect to the vertical direction (MD direction) of the fiber may be 50 mN or more and 500 mN or less, may preferably be 80 mN or more and 450 mN or less, or may more preferably be 100 mN or more and 400 mN or less.

The tear strength with respect to the horizontal direction (CD direction) may be 200 mN or more and 1000 mN or less, may preferably be 250 mN or more and 900 mN or less, or may more preferably be 300 mN or more and 800 mN or less. The tear strength may be measured in accordance with JIS P 8116 (2000).

The Taber stiffness of the packaging bag 10 is not particularly limited. For example, the Taber stiffness with respect to the vertical direction (MD direction) of the fiber may be 0.01 mN/m or more and 0.2 mN/m or less, may preferably be 0.02 mN/m or more and 0.17 mN/m or less, or may more preferably be 0.03 mN/m or more and 0.15 mN/m or less.

The Taber stiffness with respect to the horizontal direction (CD direction) may be 0.001 mN/m or more and 0.1 mN/m or less, may preferably be 0.01 mN/m or more and 0.08 mN/m or less, or may more preferably be 0.02 mN/m or more and 0.07 mN/m or less. The Taber stiffness may be measured in accordance with JIS P 8125 (2000).

In the packaging bag 10 according to the embodiment, a first static friction coefficient A is generated between the sheets S (sheet stack 20) and the inner surface IS of the base material BS provided on the interior of the packaging bag 10 (the inner surface IS on the side where the inner layer 10B is formed on the base material BS. A second static friction coefficient B is also generated between an artificial skin (not illustrated) and the outer surface OS of the base material BS provided on the exterior of the packaging bag 10. The second static friction coefficient B is greater than the first static friction coefficient A, and the first static friction coefficient A is 0.55 or less.

The static friction coefficient indicates the ratio of a frictional force generated on the contact surfaces of two objects in the absence of relative motion to a force acting at right angles to the contact surfaces. The static friction coefficient may be measured in accordance with JIS P 8147 (2010) horizontal method. The artificial skin refers to a molded body made of a urethane elastomer to mimic human skin.

In this embodiment, the base material BS of the packaging bag 10 includes the base layer 10A, which contains a paper component, and the inner layer 10B, which is layered on one surface of the 10A and is provided on the interior of the packaging bag 10. The inner layer 10B can contain a thermoplastic resin containing a slip agent to reduce the static friction coefficient between the base material BS and the sheets S. As a result, the base material BS can slide easily with respect to the sheets S. Hence, when the perforations M are provided in the paper packaging bag 10, the perforations M can be torn easily, and the packaging bag 10 can be opened easily even though the packaging bag 10 is made of paper (FIGS. 1 and 10).

In this embodiment, since the first static friction coefficient A, which exists between the sheet S and the inner surface IS on the side where the inner layer 10B is formed on the base material BS containing the paper component, is 0.55 or less, the inner surface of the base material BS containing the paper component can slide easily with respect to the sheets S. Hence, the perforations M provided on the paper packaging bag 10 can be torn more easily, and thus the packaging bag 10 can be opened more easily (FIGS. 1 and 10).

In the embodiment, the second static friction coefficient B, which exists between the artificial skin and the outer surface OS of the base material BS provided on the exterior of the packaging bag 10, is greater than the first static friction coefficient A on the side of the inner surface IS of the base material BS. As a result, the inner surface IS of the base material BS can slide easily with respect to the sheets S, and the outer surface OS of the base material BS becomes resistant to sliding with respect to the artificial skin. Hence, the perforations M provided on the paper packaging bag 10 can be torn even more easily, and thus the packaging bag 10 can be opened more easily (FIGS. 1 and 10).

In the packaging bag 10 according to the embodiment, the ratio of the first static friction coefficient A to the second static friction coefficient B is preferably 0.65 or less in decimal form. The ratio between the first static friction coefficient A and the second static friction coefficient B represents the ratio of the first static friction coefficient A to the second static friction coefficient B.

In the embodiment, setting the ratio of the first static friction coefficient A to the second static friction coefficient B to 0.65 or less increases the difference between the friction coefficient that exists on the inner surface IS of the base material BS with respect to the sheets S stored in the packaging bag 10 and the friction coefficient that exists on the outer surface OS of the base material BS with respect to the artificial skin (not illustrated). Hence, the perforations M provided on the paper packaging bag 10 can be torn easily, and thus the packaging bag 10 can be opened easily.

In the packaging bag 10 according to the embodiment, the second static friction coefficient B is preferably 1.1 or less. In a paper packaging bag, it is preferable for the difference between the first static friction coefficient and the second static friction coefficient to be as large as possible in the interest of improving the openability of the packaging bag. However, if the second static friction coefficient becomes too large with respect to the first static friction coefficient, the perforations provided on the paper packaging bag may tear (for example, while the sheet package 100 using the packaging bag 10 is being manufactured, distributed, stored, or the like) before the packaging bag is to be opened.

Hence, in the embodiment, setting the second static friction coefficient B to 1.1 or less allows the second static friction coefficient B to be adjusted so that the outer surface OS of the base material BS does not become too resistant to sliding. As a result, the packaging bag 10 can be prevented from tearing unexpectedly without reducing the openability of the packaging bag 10.

In the packaging bag 10 according to the embodiment, the first static friction coefficient A corresponds to the static friction coefficient between the CD direction of the base material BS and the MD direction of the sheets S. Further, the second static friction coefficient B corresponds to the static friction coefficient between the artificial skin and the CD direction of the base material BS.

In this embodiment, the MD direction of the base material BS corresponds to the lengthwise direction (X direction) of the packaging bag 10, and the CD direction of the base material BS corresponds to the width direction (Y direction) of the packaging bag 10 (FIG. 1 and FIGS. 3 to 8). The MD direction of the sheets S corresponds to the width direction (Y direction) of the packaging bag 10 or the sheet stack 20, and the CD direction of the sheets S corresponds to the lengthwise direction (X direction) of the packaging bag 10 or the sheet stack 20 (FIGS. 1 and 2).

In the embodiment, setting the static friction coefficient between the CD direction of the base material BS and the MD direction of the sheets S as the first static friction coefficient A allows the CD direction of the base material BS to slide easily with respect to the MD direction of the sheets S. In addition, setting the static friction coefficient between the artificial skin and the CD direction of the base material BS as the second static friction coefficient B allows the artificial skin to be resistant to sliding with respect to the CD direction of the base material BS.

In the embodiment, the sheets S are stored in the packaging bag 10 so that the MD direction of the sheets S is along the CD direction of the base material BS. In a case where the perforations M are formed in the MD direction of the base material BS, the perforations M can be torn by pressing the thumbs of both hands onto the surface (top surface 11), where perforations M are formed on the packaging bag 10, and moving the thumbs apart from each other in the CD direction of the base material BS (FIGS. 1 and 10). As the perforations can be easily torn with little force, the packaging bag 10 (top surface 11) can be opened more easily.

As described above, in the packaging bag 10 according to the embodiment, the tear perforation line 30 (perforations M) is formed on the top surface 11 of the packaging bag 10 so as to be along the MD direction of the base material BS.

In the embodiment, the tear perforation line 30 (perforations M) that is along the MD direction of the base material BS is formed on the top surface 11 of the packaging bag 10. Hence, the tear perforation line 30 (perforations M) can be torn by pressing the thumbs of both hands onto the top surface 11 of the packaging bag 10 and moving the thumbs apart from each other in the CD direction of the base material BS. As a result, the packaging bag 10 can be opened easily.

Furthermore, the torn tear perforation line 30 (perforations M) can form the sheet retrieval opening (opening OP) that is formed on the top surface 11 of the packaging bag 10 (FIGS. 1 and 10). Hence, the sheets S can be retrieved from the top surface 11 of the packaging bag 10.

In this embodiment, the tear perforation line 30 (perforations M) is formed along the MD direction of the base material BS and the CD direction of the sheets S, and the static friction coefficient is measured in directions (the CD direction of the base material BS and the MD direction of the sheets S) perpendicular to the direction of extension of the perforations M. However, the respective directions of the sheets S and the base material BS in which the static friction coefficient is measured are not limited. For example, the tear perforation line 30 (perforations M) may be formed along the CD direction of the base material BS and the MD direction of the sheets S, and the static friction coefficient may be measured in directions (the MD direction of the base material BS and the CD direction of the sheets S) perpendicular to the direction of extension of the perforations M.

Further, although a case in which the sheets S are stored in the packaging bag 10 such that the MD direction of the sheets S is in the CD direction of the base material BS is described in the embodiment, the storage of the sheets is not limited to the relationship between the MD direction of the sheets S and the CD direction of the base material BS. That is, the direction in which the sheets S are stored in the packaging bag 10 is not limited. For example, the sheets S may be stored in the packaging bag 10 so that the MD direction of the sheets S is in the MD direction of the base material BS.

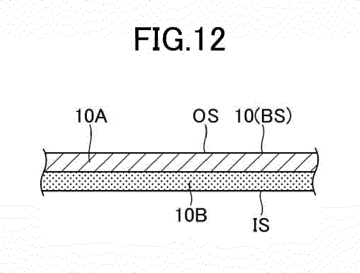

FIG. 12 is a view illustrating a cross section of the base material of a packaging bag according to the second embodiment. In the second embodiment illustrated in FIG. 12, the same reference numerals as in FIG. 9 are used to denote components in common with the first embodiment illustrated in FIG. 9, and a description thereof will be omitted.

The base material BS forming the packaging bag 10 according to the second embodiment includes the base layer 10A and the inner layer 10B. The base material BS according to the second embodiment is composed of a two-layer structure in which the inner layer 10B is layered on one surface of the base layer 10A (FIG. 12).

In the packaging bag 10 according to the second embodiment, the outer layer 10C is not layered on the other surface of the base layer 10A. Yet, in a similar manner to the first embodiment, the first static friction coefficient A, which is generated between the sheet S (the sheet stack 20) and the inner surface IS of the base material BS provided on the interior of the packaging bag 10, is smaller than the second static friction coefficient B, which is generated between an artificial skin (not illustrated) and the outer surface OS of the base material BS provided on the exterior of the packaging bag 10. Furthermore, the first static friction coefficient A is 0.55 or less.

As a result, in the second embodiment, in a similar manner to the first embodiment, the inner surface IS of the base material BS can slide easily with respect to the sheets S stored in the packaging bag 10, and the outer surface OS of the base material BS can become resistant to sliding with respect to the artificial skin (not illustrated). Thus, in also the second embodiment, when the perforations M are provided in the paper packaging bag 10, the perforations M can be torn easily, and the packaging bag 10 can be opened easily even though the packaging bag is made of paper (FIGS. 1 and 10).

In also the packaging bag 10 according to the second embodiment, the ratio of the first static friction coefficient A to the second static friction coefficient B is 0.65 or less. Hence, in also the second embodiment, it is possible to increase the difference between the friction coefficient on the side of the inner surface IS of the base material BS with respect to the sheets S stored in the packaging bag 10 and the friction coefficient on side of the outer surface OS of the base material BS with respect to the artificial skin (not illustrated). Therefore, the perforations M provided on the paper packaging bag 10 can be torn easily, and the packaging bag 10 can be opened easily.

The sheet package 100 according to the embodiment can use the packaging bag 10 as described above. More specifically, the sheet package 100 includes the packaging bag 10 (the packaging bag according to the first embodiment) and the sheets S stored in the packaging bag 10 (FIGS. 1 and 2).

The sheet package 100 according to the embodiment can achieve the same effects as the packaging bag 10 described above by being formed as a sheet package in which the sheets S have been stored in the packaging bag 10 described above. That is, in the sheet package 100 according to the embodiment, even in a case where the packaging bag 10 that forms the sheet package 100 is made of paper, the perforations M provided in the paper packaging bag 10 can be torn easily, and the packaging bag can be opened easily even though the packaging bag is made of paper (FIGS. 1 and 10).

In the packaging bag 10 according to the embodiment, the texture of the packaging bag 10 has been softened by providing the inner layer (resin layer) 10B containing a thermoplastic resin on one surface of the base layer (paper layer) 10A containing the paper component. Hence, the stiff texture of the packaging bag 10 can be reduced, and the packaging bag 10 can be imparted with conformability. Therefore, even in a case where the material of the packaging bag is changed from resin to paper, it is possible to provide a packaging bag 10 that is less likely to break during manufacturing and transport.

Furthermore, in the embodiment, since the tear perforation line 30 is provided on the packaging bag 10 that has been imparted with conformability by layering the inner layer (resin layer) 10B on the base layer (paper layer) 10A, the tear perforation line 30 can be torn easily.

Also, in the embodiment, the inner layer (resin layer) 10B provided on one surface of the base layer (paper layer) 10A contains a thermoplastic resin. Hence, when sealing the packaging bag 10, the inner layer (resin layer) 10B can be heated, and the melted inner layer (resin layer) 10B can function as an adhesive (that is, can have an adhesive function). Hence, the packaging bag 10 can be sealed easily.

Further, in the embodiment, the proportion of the paper component in the packaging bag 10 is 50% or more. Thus, the environmental impact can be reduced. Setting the proportion of the paper component in the packaging bag 10 to 50% or more can reduce the amount of plastic used in the packaging bag 10.

In the embodiment, as described above, setting the thickness of the inner layer (resin layer) 10B to 5 um or more and 40 um or less can enable the proportion of the paper component in the packaging bag to be maintained at 50% or more. Furthermore, setting the thickness of the inner layer (resin layer) 10B to 5 µm or more and 40 um or less can reduce the stiff texture of the packaging bag 10 while allowing the adhesive function of the inner layer (resin layer) 10B during sealing of the packaging bag to be maintained.

In the embodiment, using low-density polyethylene as the thermoplastic resin contained in the inner layer (resin layer) 10B as described above can further reduce the stiff texture of the packaging bag 10 while allowing the adhesive function of the inner layer (resin layer) 10B during sealing of the packaging bag 10 to be improved.

In the embodiment, as described above, the packaging bag 10 employs pillow packaging. By heat sealing at least one sealing portion in a state where the inner layer (resin layer) 10B is provided on the interior of the packaging bag 10, the resin layers can be adhered together. Hence, the adhesive function of the inner layer (resin layer) 10B can be used effectively, and the packaging bag 10 that has a high sealing property can be obtained.

In the embodiment, providing the tear perforation line 30 in the packaging bag 10 allows the packaging bag 10 to be opened by simply tearing the tear perforation line 30. The torn tear perforation line 30 can serve as the retrieval opening (opening OP) of the packaging bag 10. Furthermore, in the embodiment, since the tear perforation line 30 is provided on the packaging bag 10 that has been imparted with conformability by layering the inner layer (resin layer) 10B on the base layer (paper layer) 10A, the tear perforation line 30 can be torn easily.

### [Examples]

The present invention will be further described in detail hereinafter with reference to examples. The examples and a comparative example were evaluated based on the following tests.

### [Test Sample]

As a test sample, the sheet package 100 in which a plurality of sheets S (sheet stack 20) is pillow-packaged in the packaging bag 10 was prepared (FIGS. 1 to 8) .

The packaging bag 10 was formed by the base material BS, and the base material BS was composed of the base layer 10A, the inner layer 10B, and the outer layer 10C (FIG. 9). The material of the inner layer 10B was low-density polyethylene (PE). The outer layer 10C was a gravure-printed layer. The tear perforation line 30 (perforations M) that extends from the sealing portion 40 to the sealing portion 50 in the lengthwise direction (MD direction) of the packaging bag 10 was formed on the top surface 11 of the packaging bag 10. The ratio of the tie T to the cut C of the perforations M was 1:2 for each example and 1:5 for the comparative example.

Single-ply (1-ply) paper towels (product name: "Elvale Paper Towel Eco-Dry [medium size]", manufacturer: Daio Paper Corporation, 200 towels, height H1: 65 mm, length L1: 210 mm, width (depth) W1: 115 mm, basis weight 33 g/m², paper thickness: 180 pm) and double-ply paper towels (product name: "Elleair Paper Towel Smart-Type Double [medium size]", manufacturer: Daio Paper Corporation, 200 towels, height H1: 60 mm, length L1: 210 mm, width (depth) W1: 115 mm, basis weight 16 g/m² × 2) were used as examples of the sheet stack 20 as a stack of paper towels in which the respective sheets S were folded and stacked.

### [Grammage]

The grammage (basis weight) of each of the base material (whole layer) BS and the base layer 10A of the packaging bag 10 of the test sample (sheet package 100) was measured in accordance with JIS P 8124 (2011). The unit of the grammage is g/m².

### [Paper Thickness]

The paper thickness (thickness) of each of the base material (whole layer) BS and the base layer 10A of the packaging bag 10 of the test sample (sheet package 100) was measured using an ISO-standard paper thickness gauge (MEI-11 manufactured by Citizen Finedevice Co., Ltd.) that is in compliance with the standard of JIS P 8118 (2014). The unit of thickness is um.

### [Tensile Strength]

The tensile strength (mN) in the vertical direction (MD direction) and the tensile strength (mN) in the horizontal direction (CD direction) were measured for each of the base material (whole layer) BS and the base layer 10A of the packaging bag 10 of the test sample (sheet package 100). Tensilon Universal Material Testing Instrument (RTG-1210 manufactured by A&D Co., Ltd.) in compliance with the standard of JIS P 8113 (2006) was used for the measurement.

### [Elongation]

The elongation (%) in the vertical direction (MD direction) and the elongation (%) in the horizontal direction (CD direction) were measured for each of the base material (whole layer) BS and the base layer 10A of the packaging bag 10 of the test sample (sheet package 100). Tensilon Universal Material Testing Instrument (RTG-1210 manufactured by A&D Co., Ltd.) in compliance with the standard of JIS P 8113 (2006) was used for the measurement.

### [Tear Strength]

The tear strength in the vertical direction (MD direction) of the fiber and the tear strength in the horizontal direction (CD direction) of the fiber were measured for each of the base material (whole layer) BS and the base layer 10A of the packaging bag 10 of the test sample (sheet package 100). A tear strength tester (Elmendorf Tearing Tester (digital display type) manufactured by Kumagai Riki Kogyo Co., Ltd.) in compliance with the standard of JIS P 8116 (2000) was used for the measurement.

### [Taber Stiffness]

The Taber stiffness of the base material (whole layer) BS of the packaging bag 10 of the test sample (sheet package 100) was measured in accordance with JIS P 8125 (2000). A Taber Stiffness Tester (manufactured by Toyo Seiki Seisaku-sho, Ltd.) was used to measure the Taber stiffness.

### [Static Friction Coefficient]

The static friction coefficient was measured based the standard of JIS P 8147 (2010) horizontal method. A load cell tensile tester (AGS-500B manufactured by Shimadzu Corporation) was used to measure the static friction coefficient.

More specifically, a static friction coefficient A1 between the CD direction of the inner surface IS (inner layer 10B) of the base material BS of the packaging bag 10 and the MD direction of the sheets S (web: single) in the test sample (sheet package 100), a static friction coefficient A2 between the CD direction of the inner surface IS (inner layer 10B) of the base material BS of the packaging bag 10 and the MD direction of the sheets S (web: double), and a static friction coefficient B between the CD direction of the outer surface OS (outer layer 10C) of the base material BS of the packaging bag 10 and the artificial skin (Bioskin plate No. 132 #BSC that is made of a thermoplastic urethane elastomer and manufactured by Beaulax Co., Ltd.) were measured.

In the measurement of the static friction coefficients A1 and A2, the base material BS was fixed to the horizontal-plate side of the friction tester so that the CD direction of the inner surface (inner layer 10B) of the base material BS was the front side, and the sheets S were fixed to the weight side of the friction tester so that the MD direction of the front surface of the sheets S was the front side.

In the measurement of the static friction coefficient B, the base material BS was fixed to the side of the horizontal plate of the friction tester so that the CD direction of the outer surface OS (outer layer 10C) of the base material BS became the front side. The artificial skin was cut from an artificial skin plate of 100 mm (length) × 100 mm (width) × 5 mm (thickness) to fit the weight side of the friction tester. The cut piece of artificial skin was attached to the weight side of the friction so that the front surface (non-glossy surface) became the measurement surface.

Note that if the size of the test piece is insufficient, a test piece can be pieced together using a paper-based sealant or the like on the entire back surface (non-measuring surface) of the test piece. In such a case, care should be taken to prevent wrinkling or sagging.

### [Ease of Opening Perforations]

The ease of opening the perforations M (tear perforation line 30) formed on the top surface 11 of the packaging bag 10 of the test sample (sheet package 100) was checked. The test was conducted on a case in which the single-ply paper towels were stored as the sheets S (web) in the packaging bag 10 and a case in which a double-ply paper towels were stored in the packaging bag 10. The ease of opening the perforations of the sheet package 100 was evaluated by ten users. Each user pressed the surface (top surface 11), where perforations M are formed on the packaging bag 10, with the thumbs of both hands and moved the thumbs apart from each other in the CD direction of the base material BS. The ease of opening the perforations of the sheet package 100 was evaluated as A (excellent: torn easily) when 0 users answered that opening was difficult, B (good: can be torn) when 1 to 3 users answered that opening was difficult, and C (poor: perforations cannot be torn or can be torn but are difficult to tear) when 4 or more users answered opening was difficult. The evaluation criteria are as follows.
A: The perforations M can be torn easily.
B: The perforations M can be torn.
C: The perforations M cannot be torn or can be torn but are difficult to tear.

The examples and the comparative example will be described below.

### [Example 1]

When the inner layer 10B of the base material BS of the packaging bag 10 was made of PE containing a slip agent and a gripping agent (varnish) was applied to the outer layer 10C, the static friction coefficient A1 was 0.42, the static friction coefficient A2 was 0.38, and the static friction coefficient B was 0.96. The ease of opening of the perforations was A for both single-ply towels and double-ply towels. The conditions of the packaging bag 10, the conditions of the sheets (web), and the evaluation results (the static friction coefficients and the ease of opening of the perforations) are indicated in TABLE 1.

### [Example 2]

The evaluation was performed in the same manner as in Example 1 except that the static friction coefficient A1 was 0.46, the static friction coefficient A2 was 0.45, and the static friction coefficient B was 0.95. The ease of opening of the perforations was B for both single-ply towels and double-ply towels. The conditions of the packaging bag 10, the conditions of the sheets (web), and the evaluation results are indicated in TABLE 1.

### [Example 3]

The evaluation was performed in the same manner as in Example 1 except that the static friction coefficient A1 was 0.41, the static friction coefficient A2 was 0.37, and the static friction coefficient B was 0.8. The ease of opening of the perforations was A for both single-ply towels and double-ply towels. The conditions of the packaging bag 10, the conditions of the sheets (web), and the evaluation results are indicated in TABLE 1.

### [Comparative Example 1]

When the inner layer 10B of the base material BS of the packaging bag 10 was made of PE not containing a slip agent and a gripping agent (varnish) was not applied to the outer layer 10C, the static friction coefficient A1 was 0.57, the static friction coefficient A2 was 0.69, and the static friction coefficient B was 1.2. The ease of opening of the perforations was C for both single-ply towels and double-ply towels. The conditions of the packaging bag 10, the conditions of the sheets (web), and the evaluation results are indicated in TABLE 1.

### [Reference Example 1]

When a sheet package in which the plurality of sheets S (sheet stack 20) is pillow-packaged in a resin-film packaging bag was prepared, static friction coefficient A1 was 0.3, the static friction coefficient A2 was 0.27, and static friction coefficient B was 1.14. The ease of opening of the perforations was A for both single-ply towels and double-ply towels. The conditions of the packaging bag, the conditions of the sheets (web), and the evaluation results are indicated in TABLE 1.

**[TABLE 1]**

| | | | | | EXAMPLE 1 | EXAMPLE 2 | EXAMPLE 3 | COMPARATIVE EXAMPLE 1 | REFERENCE EXAMPLE 1 |
|---|---|---|---|---|---|---|---|---|---|
| | WHOLE LAYER | GRAMMAGE | | g/m² | 42.1 | 45.4 | 48.2 | 41.7 | 20.3 |
| | | PAPER THICKNESS | | *µ*m | 59 | 108 | 77 | 56 | 23 |
| | | TENSILE STRENGTH (N/25 mm) | VERTICAL | cN/25 mm | 11,100 | 2,775 | 4,500 | 12,100 | 2,000 |
| | | | HORIZONTAL | cN/25 mm | 2,575 | 1,825 | 1,850 | 2,675 | 3,000 |
| | | ELONGATION | VERTICAL | % | 2.3 | 16.9 | 15.3 | 3.4 | 336 |
| | | | HORIZONTAL | % | 1.8 | 2.3 | 2.8 | 3.1 | 6.9 |
| | | TEAR STRENGTH | VERTICAL | mN | 194 | 384 | 302 | 164 | 136 |
| | | | HORIZONTAL | mN | 396 | 599 | 578 | 306 | 8,540 |
| | | TABER STIFFNESS | VERTICAL | mN/m | 0.12 | 0.06 | 0.05 | 0.08 | MEASUREMENT UNAVAILABLE |
| | | | HORIZONTAL | mN/m | 0.03 | 0.06 | 0.04 | 0.02 | MEASUREMENT UNAVAILABLE |
| | BASE LAYER | GRAMMAGE | | g/m² | 30 | 30 (WET) | 28 | 30 | |
| PACKAGING BAG | | PAPER THICKNESS | | *µ*m | 53 | 150 | 90 | 53 | |
| | | TENSILE STRENGTH (N/25 mm) | VERTICAL | cN/25 mm | 10,500 | 1,903 | 2,200 | 10,500 | |
| | | | HORIZONTAL | cN/25 mm | 2,175 | 1,505 | 850 | 2,175 | |
| | | ELONGATION | VERTICAL | % | 3.5 | - | 14.0 | 3.5 | |
| | | | HORIZONTAL | % | 2.6 | - | 4.5 | 2.6 | |
| | | TEAR STRENGTH | VERTICAL | mN | 157 | 400 | - | 157 | |
| | | | HORIZONTAL | mN | 374 | 620 | - | 374 | |
| | INNER LAYER | MATERIAL | | | PE | PE | PE | PE | |
| | | THICKNESS | | *µ*m | 11 | 15 | 20 | 11 | |
| | | ADDITION OF SLIP AGENT | | | YES | YES | YES | NO | |
| | OUTER LAYER | PRINTING METHOD | | | GRAVURE | GRAVURE | GRAVURE | GRAVURE | |
| | | VARNISH COATING | | | YES | YES | YES | NO | |
| | PERFORATIONS | LENGTH | | | ENTIRE WIDTH | ENTIRE WIDTH | ENTIRE WIDTH | ENTIRE WIDTH | ENTIRE WIDTH |
| | | TIE:CUT | | mm | 1:2 | 1:2 | 1:2 | 1:5 | 1:1.5 |
| WEB | SINGLE | | GRAMMAGE | g/m² | 33 | 33 | 33 | 33 | 33 |
| | DOUBLE | | GRAMMAGE | g/m² | 16 × 2 | 16 × 2 | 16 × 2 | 16 × 2 | 16 × 2 |
| EVALUATION | STATIC FRICTION COEFFICIENT A1 BETWEEN INNER LAYER AND WEB (SINGLE) | | | | 0.42 | 0.46 | 0.41 | 0.57 | 0.3 |
| | STATIC FRICTION COEFFICIENT A2 BETWEEN INNER LAYER AND WEB (DOUBLE) | | | | 0.38 | 0.45 | 0.37 | 0.69 | 0.27 |
| | STATIC FRICTION COEFFICIENT B BETWEEN OUTER LAYER AND ARTIFICIAL SKIN | | | | 0.96 | 0.95 | 0.8 | 12 | 1.14 |
| | EASE OF OPENING PERFORATIONS (SINGLE) | | | | A | B | A | C | A |
| | EASE OF OPENING PERFORATIONS (DOUBLE) | | | | A | B | A | C | A |

In TABLE 1, the ease of opening the perforations was favorable for the test samples (Examples 1 to 3) in which the base material BS included the base layer 10A with a paper component and the inner layer 10B provided on the interior of the packaging bag 10 and layered on one surface of the base layer 10A, and in which the inner layer 10B contained a thermoplastic resin containing a slip agent.

In contrast, the ease of opening the perforations was unfavorable for the test sample (Comparative Example 1) in which the inner layer 10B of the base material BS contained a thermoplastic resin that did not contain a slip agent.

That is, the embodiment is a packaging bag formed of a base material that contains a paper component. In regard to the base material in which at least a tear perforation line for retrieving sheets is formed, the static friction coefficient between the outer surface of the base material and fingers (or artificial skin) of a person who is to tear the tear perforation line is greater than the static friction coefficient between the inner surface of the base material and the sheets. Hence, when the tear perforation line is to be torn, the fingers will not slip and cause difficulty in tearing.

Further, the base material that has such a static friction coefficient may be formed on the entire surface of the packaging bag or only on the surface (for example, the top surface of the packaging bag) where tear perforation line is formed. Furthermore, the static friction coefficient between a person's fingers (or artificial skin) and a partial area of the base material with which the fingers come into contact when the tear perforation line is being torn can be made greater than the static friction coefficient between the inner surface of the base material and the sheets.

The embodiments of the present invention have been described above. The present invention is, however, not limited to these specific embodiments, and various changes and modifications can be made without departing from the scope of the present invention as described in the appended claims.

Preferred aspects of the present invention will be additionally described below.

A first aspect of the present invention provides a packaging bag for storing sheets, the packaging bag being formed a base material that contains a paper component. The base material includes a base layer that contains the paper component and an inner layer that is layered on one surface of the base layer and is provided on an interior of the packaging bag. The inner layer contains a thermoplastic resin, and the thermoplastic resin contains a slip agent.

In the specification, the paper component is a material in which cellulose fibers (pulp) have been agglutinated. The interior of the packaging bag refers to the side where the sheets stored in the packaging bag contact the base material. The slip agent is an agent that reduces the friction coefficient.

In the first aspect, the base material of the packaging bag includes a base layer containing a paper component and an inner layer that is layered on one surface of the base layer and is provided on the interior of the packaging bag, and the inner layer contains a thermoplastic resin containing a slip agent. Hence, the static friction coefficient between the base material and the sheets can be reduced. As a result, the base material can slide easily with respect to the sheets. When perforations are provided in a packaging bag made of paper, the perforations can be torn easily, and the packaging bag can be opened easily although the packaging bag is made of paper.

A second aspect of the present invention provides a packaging bag that has a first static friction coefficient between the sheet and an inner surface of the base material. The inner surface has the inner layer formed thereon. The first static friction coefficient is 0.55 or less.

In the specification, the static friction coefficient indicates the ratio of a frictional force generated on the contact surfaces of the two objects in the absence of relative motion to a force acting at right angles to the contact surfaces. The inner surface on the side where the inner layer of base material is formed indicates the surface on the side where the sheets stored in the packaging bag contact the base material.

In the second aspect, the first static friction coefficient between the sheet and the inner surface on the side where the inner layer of the base material containing the paper component is formed is 0.55 or less. As a result, the inner surface of the base material containing the paper component can slide easily with respect to the sheets. Hence, the perforations provided on the packaging bag made of paper can be torn more easily, and the packaging bag can be opened more easily.

A third aspect of the present invention provides a packaging bag that has a second static friction coefficient between artificial skin and an outer surface of the base material provided on an exterior of the packaging bag. The second static friction coefficient is greater than the first static friction coefficient.

In the specification, the outer surface of the base material provided on the exterior of the packaging bag indicates the surface on the side that does not contact the sheets stored in the packaging bag. The artificial skin refers to a molded body that is made of urethane to mimic human skin.

In the third aspect, the second static friction coefficient between the artificial skin and the outer surface of the base material provided on the exterior of the packaging bag is greater than the first static friction coefficient on the side of the inner surface of the base material. As a result, the inner surface of the base material can slide easily with respect to the sheets, and the outer surface of the base material becomes resistant to sliding with respect to the artificial skin. Hence, the perforations provided on the packaging bag made of paper can be torn more easily, and thus the packaging bag can be opened more easily.

A fourth aspect of the present invention provides a packaging bag wherein a ratio of the first static friction coefficient to the second static friction coefficient is 0.65 or less. In the specification, the ratio between the first static friction coefficient and the second static friction coefficient indicates the ratio of the first static friction coefficient to the second static friction coefficient.

In the fourth embodiment, making the ratio of the first static friction coefficient to the second static friction coefficient 0.65 or less increases the difference between the friction coefficient on the side of the inner surface of the base material with respect to the sheets and the friction coefficient on the side of the outer surface of the base material with respect to the artificial skin. Hence, the perforations provided on the packaging bag made of paper can be torn more easily, and thus the packaging bag can be opened more easily.

A fifth aspect of the present invention provides a packaging bag wherein the second static friction coefficient is 1.1 or less. In the packaging bag made of paper, the difference between the first static friction coefficient and the second static friction coefficient B is preferably as large as possible in the interest of improving the openability. If the second static friction coefficient becomes too large with respect to the first static friction coefficient, the perforations provided on the packaging bag made of paper may tear open (for example, while the sheet package using the packaging bag is being distributed or the like) before the packaging bag is to be opened.

Therefore, in the fifth aspect, by setting the second static friction coefficient to 1.1 or less, the second static friction coefficient is adjusted such that the outer surface of the base material does not become too resistant to sliding. As a result, the packaging bag can be prevented from tearing unexpectedly without reducing the openability of the packaging bag.

A sixth aspect of the present invention provides a packaging bag wherein the first static friction coefficient is a static friction coefficient between a CD direction of the base material and an MD direction of the sheets, and the second static friction coefficient is a static friction coefficient between the artificial skin and the CD direction of the base material. In the specification, the MD direction is a direction corresponding to the direction of travel of the base material with respect to the paper-making machine that is used to manufacture the base material that forms the packaging bag made of paper. The CD direction is a direction corresponding to the direction perpendicular to the direction of travel.

In the sixth aspect, by setting the static friction coefficient between the CD direction of the base material and the MD direction of the sheets as the first static friction coefficient, the CD direction of the base material can slide easily with respect to the MD direction of the sheets. Furthermore, by setting the static friction coefficient between the CD direction of the base material and the artificial skin as the second static friction coefficient, the CD direction of the base material becomes resistant to sliding with respect to the artificial skin.

As a result, in a case where the sheets are stored in the packaging bag so that the MD direction of the sheets is in the CD direction of the base material and the perforations are formed in the MD direction of the base material, the perforations can be torn by pressing the surface where the perforations are formed on the packaging bag and moving the thumbs apart from each other in the CD direction of the base material. Since the perforations can be easily torn with little force during this time, the packaging bag can be opened more easily.

A seventh aspect of the present invention provides a packaging bag wherein a tear perforation line is formed on the top surface of the packaging bag, the tear perforation line being formed along the MD direction of the base material. In the specification, the tear perforation line indicates a cutting line (for example, perforations) in which a cut and a tie (an uncut portion between two cuts) are alternately provided, and in which two adjacent cuts form a continuous cut when the tie is torn.

In the seventh aspect, the tear perforation line is formed on the top surface of the packaging bag along the MD direction of the base material. As a result, the packaging bag can be opened easily because the tear perforation line can be torn by pressing the top surface of the packaging bag with the thumbs of both hands and moving the thumbs part from each other in the CD direction of the base material. Furthermore, the torn tear perforation line can form the sheet retrieval opening formed on the top surface of the packaging.

An eighth aspect of the present invention provides a sheet package including the packaging bag according to the first to seventh aspects and the sheets stored in the packaging bag. In the eighth aspect, the same effects as those of the above-described packaging bag can be obtained by forming the sheet package in which the sheets are stored in the above-described packaging bag. That is, according to the eighth aspect, even in a case where the packaging bag forming the sheet package is made of paper, it is possible to provide a sheet package in which the packaging bag made of paper can be opened easily.

The present application is based on and claims priority to Japanese Patent Application No. 2021-160335, filed September 30, 2021, the entirety of which is incorporated herein by reference.

### Description of the Reference Numerals

100 sheet package
10 packaging bag
BS base material
IS inner surface
OS outer surface
10A base layer (paper layer)
10B inner layer (resin layer)
10C outer layer (printed layer)
11 top surface
12 bottom surface
13, 14 side surface
15, 16 end surface
20 sheet stack
S sheet
30 tear perforation line
M perforations
OP retrieval opening (opening)
40, 50 sealing portion (end seal)
60 sealing portion (bottom seal)
L1, L2 length
W1, W2 width
H1, H2 height

## Claims

1. A packaging bag for storing sheets, the packaging bag comprising:
a base material that contains a paper component,
wherein the base material includes
a base layer that contains the paper component, and
an inner layer that is layered on one surface of the base layer and is provided on an interior of the packaging bag,
wherein the inner layer contains a thermoplastic resin, and
the thermoplastic resin contains a slip agent.

2. The packaging bag according to claim 1, wherein a first static friction coefficient exists between the sheets and an inner surface of the base material, the inner surface having the inner layer formed thereon, and
wherein the first static friction coefficient is 0.55 or less.

3. The packaging bag according to claim 2, wherein a second static friction coefficient exists between artificial skin and an outer surface of the base material provided on an exterior of the packaging bag, and
wherein the second static friction coefficient is greater than the first static friction coefficient.

4. The packaging bag according to claim 3, wherein a ratio of the first static friction coefficient to the second static friction coefficient is 0.65 or less.

5. The packaging bag according to claim 3 or 4, wherein the second static friction coefficient is 1.1 or less.

6. The packaging bag according to any one of claims 3 to 5, wherein the first static friction coefficient is a static friction coefficient between a CD direction of the base material and an MD direction of the sheets, and
wherein the second static friction coefficient is a static friction coefficient between the artificial skin and the CD direction of the base material.

7. The packaging bag according to claim 6, wherein a tear perforation line is formed on a top surface of the packaging bag along the MD direction of the base material.

8. A sheet package comprising:
the packaging bag of any one of claims 1 to 7; and
the sheets stored in the packaging bag.
